# FASCICULE DE BREVET EUROPEEN

(11) **EP 0 544 195 B1**
(45) Date de publication et mention de la délivrance du brevet: **25.10.1995**
(21) Numéro de dépôt: 92119789.3
(22) Date de dépôt: 20.11.1992
(51) Int. Cl.: G04C 10/00, H01M 2/10

(54) **Conteneur de pile de remplacement pour montre**
Austauschbatteriebehälter für Uhren
Container for replacement battery for watch

(30) Priorité: 28.11.1991 CH 3489/91
(43) Date de publication de la demande: 02.06.1993
(73) Titulaire: Eta SA Fabriques d'Ebauches, 2540 Granges (CH)
(72) Inventeur: Paratte, Daniel, CH-2003 Neuchâtel (CH); Delacrétaz, Charles-Henri, CH-2544 Bettlach (CH)
(74) Mandataire: de Raemy, Jacques

(56) Documents cités:
- EP-A- 0 360 140
- FR-A- 1 193 947

## Description

La présente invention concerne un conteneur de pile de remplacement pour montre, cette montre comportant un logement dans lequel peut être engagé et verrouillé un support dans lequel prend place une pile pour l'alimentation de la montre.

Des montres comportant un logement dans lequel peut être engagé et verrouillé un support dans lequel prend place une pile pour l'alimentation de la montre sont connues et deux exemples vont être discutés dans cette description. Il s'agit ici en fait de permettre au porteur de la montre d'échanger lui-même la pile de sa montre sans faire appel à un homme de métier. Selon la construction de la montre, la pile peut être introduite soit par le fond et tenue en place au moyen d'un bouchon vissé, soit latéralement et supportée alors par un tiroir. Le verrouillage et le déverrouillage du support, bouchon ou tiroir peuvent se faire au moyen d'un outil livré à l'achat de la montre, outil que le porteur peut avoir égaré ou oublié lorsque le changement de pile est nécessaire. Pour éviter cet outil, des solutions ont déjà été proposées faisant appel, comme on le verra par la suite, soit à une pièce de monnaie, soit à une boucle de bracelet, solutions qui ne sont pas nécessairement les plus heureuses pour les raisons qui apparaîtront plus bas.

Comme les piles de rechange doivent répondre à un certain conditionnement pour la vente au public et que ce conditionnement passe très souvent par un conteneur dans lequel la pile est emballée, le titulaire de la présente invention a eu l'idée d'utiliser ce conteneur pour lui incorporer des moyens permettant au moins de déverrouiller le support portant la pile qui doit être échangée, ce support faisant partie de la montre.

L'invention sera expliquée maintenant à l'aide de la description qui suit donnée à titre d'exemple et en s'aidant du dessin qui l'illustre et dans lequel :
La figure 1 est une vue en perspective du conteneur selon l'invention et selon une première forme d'exécution,
la figure 2 est une vue en perspective d'une des parties du conteneur selon l'invention et selon une seconde forme d'exécution,
la figure 3 est une vue du conteneur selon la figure 1, mais présenté fermé et montrant son utilisation comme porte-clefs,
la figure 4 est une représentation partielle d'une montre munie d'un support de pile qui peut être déverrouillé par le conteneur de la figure 1, et
la figure 5 est une représentation partielle d'une montre munie d'un support de pile qui peut être verrouillé et déverrouillé par le conteneur de la figure 2.

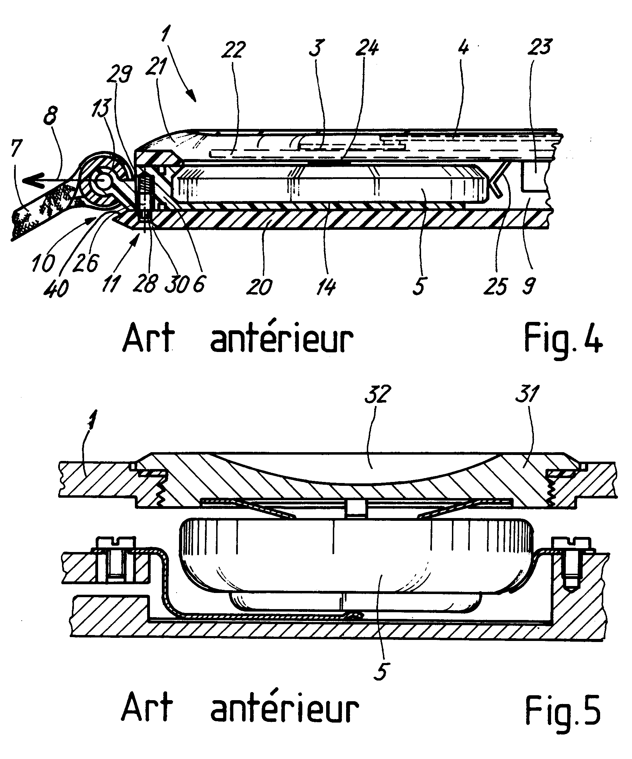

La figure 4 est une coupe de la partie fond d'une montre comprenant d'une part un boîtier 1 attaché de part et d'autre à un bracelet dont seul le brin 7 est représenté. Dans ce boîtier, on trouve des moyens d'affichage figurés ici par des aiguilles d'heures 3 et de minutes 4. La montre-bracelet comporte une pile d'alimentation 5 logée dans un tiroir 6, lequel tiroir est attaché au brin 7 du bracelet au moyen d'une articulation 13. La pile 5 et le tiroir 6 qui la porte peuvent être sortis dans le sens de la flèche 8 du logement 9 par une ouverture 10 pratiquée dans le boîtier. Ce boîtier est limité par un fond 20 et une partie supérieure ou carrure 21. Le tiroir 6 comporte un fond-support 14 qui reçoit la pile 5. La pile alimente par ses connexions 24 et 25 un circuit électronique 23. Un mécanisme 22 entraîne les aiguilles 3 et 4.

La montre comprend des moyens de verrouillage 11 du tiroir 6 dans le boîtier 1. Ces moyens consistent ici en un poussoir 26 coulissant dans un tube ancré dans le tiroir 6. Le poussoir 26 comporte une tête 28 qui émerge du tube sous l'action d'un ressort 29. Quand le tiroir est introduit dans son logement 9, la tête 28 du poussoir 26 pénètre dans un trou 30 pratiqué dans le fond 20 et bloque ainsi le tiroir dans le boîtier. Pour sortir le tiroir, il faut exercer une poussée sur la tête 28 tout en tirant simultanément sur le brin 7. Inversement, en fin d'introduction du tiroir dans le boîtier, le poussoir 26 s'escamote dans le tube par l'action conjuguée de la tête 28 et d'une rampe 40 dont est équipé le fond 20, jusqu'à ce que la tête 28 se trouve au droit du trou 30 dans lequel elle pénètre.

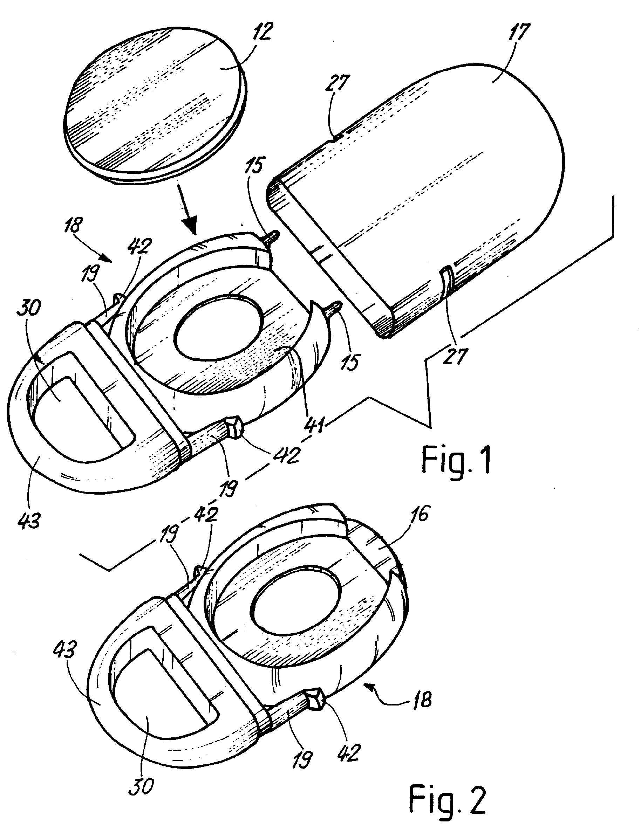

Le verrouillage du tiroir 6 comporte au moins un poussoir 26. Préférablement, on disposera cependant deux poussoirs pour assurer une fermeture stable et sans jeu. Pour exercer la pression sur le poussoir, on peut utiliser une pointe quelconque. Un système décrit dans la demande de brevet suisse 679 357 G A3 appartenant au même titulaire, consiste à se servir de la bouche attachée à l'une des extrémités du bracelet, cette bouche portant deux aspérités formées en prolongement des branches de la bouche. Si l'écartement de ces aspérités correspond à l'écartement existant
entre les têtes 28 du système de verrouillage, on peut se servir de la bouche comme clef de déverrouillage en forçant lesdites aspérités dans les trous 30 pour escamoter les têtes 28 dans le tiroir et libérer ainsi ledit tiroir du boîtier.
Ce système, tout astucieux qu'il est, peut présenter un inconvénient qui est de s'accrocher aux habits du porteur de la montre et ainsi d'abîmer ces habits. Pour éviter cet inconvénient, on propose le conteneur de pile de rechange tel que montré en figure 1 où apparaît au moins un téton 15 susceptible d'être introduit dans le trou 30 pour escamoter la tête du poussoir représentée en figure 4.

La figure 1 montre en perspective le conteneur selon l'invention et selon une première forme d'exécution. Ce conteneur comporte deux parties, une première partie formant étui 17 dans laquelle une seconde partie formant tiroir 18 est susceptible d'être engagée à cran. La figure 1 montre que le tiroir 18 comporte un logement circulaire 41 dans lequel prend place la pile 12. Le tiroir 18 comporte aussi deux tétons 15 qui servent, comme on l'a expliqué plus haut, à libérer le tiroir 6 de la boîte de montre par engagement de ces tétons 15 dans les trous 30 pour escamoter les têtes 28 des poussoirs 26.

La figure 1 montre aussi une exécution de crantage du tiroir 18 dans l'étui 17. Pour cela, le tiroir 18 porte deux languettes élastiques 19, chacune des languettes étant terminée à son extrémité libre par un crochet 42 susceptible de pénétrer dans une ouverture 27 pratiquée dans l'étui 17. On s'arrange pour donner à la languette et à son crochet une forme permettant à la languette de céder quand on exerce une traction sur le tiroir.

La figure 1 montre encore que le tiroir 18 du conteneur comporte un prolongement 43 qui reste extérieur à l'étui 17 quand le tiroir est enfilé dans l'étui. Ce prolongement 43 permet à l'évidence de saisir le tiroir pour le désengager de l'étui. Ce prolongement 43 peut également être muni d'une ouverture 30 pour faciliter encore la préhension du tiroir 18, comme illustré sur la figure 1.

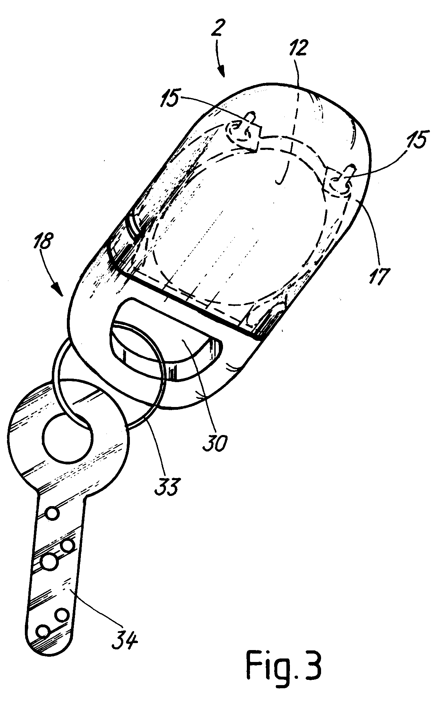

Si l'on se reporte maintenant à la figure 3 qui montre le conteneur 2 assemblé, on constatera que l'on a profité de l'ouverture 30 pratiquée dans le prolongement du tiroir 18 pour y engager un anneau fendu 33, cet anneau recevant au moins une clef 34. Dans cette application, le conteneur de pile 2 est utilisé conjointement comme porte-clefs.

On va décrire maintenant un second mode d'exécution du tiroir du conteneur. Ce second mode d'exécution est adapté à une montre représentée partiellement en figure 5. Ici le support de la pile 5 est un bouchon 31 vissé dans le dessous du boîtier que présente la montre. Le bouchon 31 porte une fente 32 qui permet de le dévisser pour permettre le changement de la pile. Généralement, on préconise l'utilisation d'une pièce de monnaie pour dévisser le bouchon. Comme le porteur de la montre ne porte pas nécessairement sur lui une telle pièce ayant l'épaisseur voulue, l'idée est de remplacer la pièce de monnaie par un outil incorporé au tiroir du conteneur. Selon l'invention, on dévisse le bouchon 31 au moyen d'une languette 16 formée à l'extrémité du tiroir 18 comme cela est représenté à la figure 2.

Ainsi dans les deux modes d'exécution pris en exemple, le conteneur est-il utilisé non seulement pour porter la pile de rechange, mais encore pour servir d'outil pour le changement de la pile de montre, ce conteneur pouvant accessoirement être utilisé comme porte-clefs accompagnant presque toujours la personne qui porte la montre.

## Revendications

1. Conteneur (2) de pile de remplacement (12) pour montre, ladite montre comportant un logement (9) dans lequel peut être engagé et verrouillé un support (6, 31) dans lequel prend place une pile (5) pour l'alimentation de la montre, caractérisé par le fait que ledit conteneur, outre qu'il porte une pile de remplacement (12), comprend au moins des moyens (15, 16) de déverrouillage dudit support portant ladite pile devant être échangée.

2. Conteneur selon la revendication 1 adapté pour déverrouiller ledit support se présentant sous la forme d'un tiroir (6) susceptible d'être engagé dans une ouverture latérale (10) du boîtier (1) que présente la montre, ledit tiroir étant verrouillé dans la montre au moyen d'au moins un poussoir (26) faisant partie dudit tiroir, le poussoir comportant une tête (28) pénétrant dans un trou (30) pratiqué dans le boîtier, caractérisé par le fait que les moyens de déverrouillage portés par le conteneur comprennent au moins un téton (15) susceptible d'être introduit dans ledit trou pour escamoter la tête du poussoir dans le tiroir et permettre ainsi le dégagement dudit tiroir hors de la montre.

3. Conteneur selon la revendication 1 adapté pour déverrouiller ledit support se présentant sous la forme d'un bouchon (31) vissé dans le dessous du boîtier (1) que présente la montre, ledit bouchon présentant une fente (32), caractérisé par le fait que les moyens de déverrouillage portés par le conteneur comprennent une languette (16) susceptible d'être introduite dans ladite fente pour déverrouiller ledit bouchon par rotation de ce dernier.

4. Conteneur selon l'une quelconque des revendications 1 à 3, caractérisé par le fait que le conteneur (2) comporte une première partie formant étui (17) dans laquelle une seconde partie formant tiroir (18) est susceptible d'être engagée à cran, ladite seconde partie portant ladite pile de remplacement (12) et lesdits moyens de déverrouillage (15, 16).

5. Conteneur selon la revendication 4, caractérisé par le fait que le crantage du tiroir (18) dans l'étui (17) est réalisé au moyen de deux languettes élastiques (19) pratiquées dans le tiroir, chaque languette comportant à son extrémité libre un crochet (42) susceptible de pénétrer dans une ouverture (27) que présente l'étui, la forme de la languette et de son crochet étant choisie de telle manière que le crantage du tiroir sur l'étui cède quand on exerce une traction sur ledit tiroir.

6. Conteneur selon la revendication 4, caractérisé par le fait que la seconde partie formant tiroir (18) comprend un prolongement (43) extérieur à la première partie formant étui quand les deux parties sont engagées d'une dans l'autre, ledit prolongement permettant de saisir le tiroir pour le désengager de l'étui.

7. Conteneur selon la revendication 6, caractérisé par le fait que ledit prolongement (43) est muni d'une ouverture (30) facilitant sa préhension.

8. Conteneur selon la revendication 7, caractérisé par le fait que dans ladite ouverture (30) peut être engagé un anneau fendu (33), ledit anneau étant susceptible de recevoir au moins une clef (34).

## Patentansprüche

1. Etui (2) für eine Ersatzbatterie (12) für eine Uhr, welche Uhr eine Aufnahme (9) umfaßt, in welche ein Support (6, 31) einführbar und verriegelbar ist, in dem eine Batterie (5) für die Speisung der Uhr untergebracht ist, dadurch gekennzeichnet, daß das Etui neben der Aufnahme der Ersatzbatterie (12) zumindest Mittel (15, 16) für das Entriegeln des die auszustauschende Batterie tragenden Supports umfaßt.

2. Etui nach Anspruch 1, ausgebildet zum Entriegeln des Supports in Form eines Schiebers (6), der in eine seitliche Öffnung (10) des Gehäuses (1), die die Uhr aufweist, einführbar ist, welcher Schieber in der Uhr mittels mindestens eines Drückers (26) verriegelt ist, der einen Teil des Schiebers bildet, welcher Drücker einen Kopf (28) umfaßt, der in ein Loch (30) eingreift, das in das Gehäuse eingearbeitet ist, dadurch gekennzeichnet, daß die von dem Etui getragenen Entriegelungsmittel mindestens einen Stift (15) umfassen, der in das Loch einführbar ist zum Verdrängen des Drückerkopfes in den Schieber und damit Lösen des Schiebers aus der Uhr.

3. Etui nach Anspruch 1, ausgebildet zum Entriegeln des Supports in Form eines Stopfens (31) der in das Unterteil des Gehäuses (1), welches die Uhr aufweist, eingeschraubt ist, welcher Stopfen einen Schlitz (32) aufweist, dadurch gekennzeichnet, daß die von dem Etui getragenen Entriegelungsmittel eine Zunge (16) umfassen, die in den Schlitz einführbar ist zum Lösen des Stopfens durch Verdrehen des letzteren.

4. Etui nach einem der Ansprüche 1 bis 3, dadurch gekennzeichnet, daß das Etui (2) eine erste Partie umfaßt, die das Behältnis (17) bildet, in das eine zweite, einen Schieber (18) bildende Partie einhakbar ist, welche zweite Partie die Ersatzbatterie (12) und die Entriegelungsmittel (15, 16) trägt.

5. Etui nach Anspruch 4, dadurch gekennzeichnet, daß die Verhakung des Schiebers (18) in dem Behältnis (17) mittels zweier elastischer Zungen (19) realisiert wird, die in den Schieber eingearbeitet sind, wobei jede Zunge an ihrem freien Ende einen Haken (42) umfaßt, der in eine Öffnung (27) eindringen kann, welche das Behältnis aufweist, wobei die Form der Zunge und ihres Hakens derart gewählt ist, daß die Verhakung des Schiebers an dem Behältnis sich löst, wenn man auf den Schieber einen Zug ausübt.

6. Etui nach Anspruch 4, dadurch gekennzeichnet, daß die zweite, den Schieber (18) bildende Partie eine Verlängerung (43) außerhalb der ersten, das Behältnis bildenden Partie aufweist, wenn die beiden Partien miteinander im Eingriff stehen, welche Verlängerung das Erfassen des Schiebers für sein Lösen von dem Behältnis ermöglicht.

7. Etui nach Anspruch 6, dadurch gekennzeichnet, daß die Verlängerung (43) mit einer ihr Erfassen erleichternden Öffnung (30) versehen ist.

8. Etui nach Anspruch 7, dadurch gekennzeichnet, daß in die Öffnung (30) ein Schlitzring (33) einhängbar ist, der mindestens einen Schlüssel (34) aufnehmen kann.

## Claims

1. Holder (2) for a replacement battery (12) for a watch, said watch including a housing (9) in which a support (6, 31) for a battery (5) for energizing the watch may be engaged and locked, characterized by the fact that said said holder, in addition it bears a replacement battery (12), comprises at least means (15, 16) for unlocking said support bearing said battery to be changed.

2. Holder according to claim 1 in which said support is a drawer (6) adapted to be engaged in a lateral opening (10) in the case (1) exhibited by the watch, said drawer being locked in the watch by means of at least one pushpiece (26) forming part of said drawer, the pushpiece including a head (28) penetrating into a hole (30) formed in the case, characterized by the fact that the unlocking means borne by the holder comprise at least one nipple (15) adapted to be introduced into said hole in order to retract the pushpiece head into the drawer and this enable the disengagement of said drawer out of the watch.

3. Holder according to claim 1 adapted to unlock said support having the form of a stopper (31) screwed into the the bottom of the case (1) exhibited by the watch, said stopper exhibiting a slot (32), characterized by the fact that the unlocking means borne by the holder comprise a tongue (16) adapted to be introduced into said slot for unlocking said stopper by rotation thereof.

4. Holder according to any one of claim 1 to 3, characterized by the fact that the holder (2) includes a first part forming a sheath (17) in which a second part forming a drawer (18) is adapted to be latch engaged, said second part bearing said replacement battery (12) and said unlocking means (15, 16).

5. Holder according to claim 4, characterized by the fact that the latching of the drawer (18) in the sheath (17) is effected by means of two elastic tongues (19) formed in the drawer, each tonghe including a hook (42) at its free end adapted to penetrate into an opening (27) exhibited by the sheath, the form of the tongue and its hook being chosen in a manner such that latching of the drawer onto the sheath yields when traction is exerted on said drawer.

6. Holder according to claim 4, characterized by the fact that the second part forming a drawer (18) comprises an extension exterior (43) to the first part forming a sheath when the two parts are engaged with one another, said extension enabling grasping the drawer in order to disengage it from the sheath.

7. Holder according to claim 6, characterized by the fact that said extension (43) is provided with an opening (30) to facilitate grasping thereof.

8. Holder according to claim 7, characterized by the fact that a split ring (33) may be engaged in said opening (30), said ring being adapted to receive at least one key (34).
